# EUROPEAN PATENT APPLICATION

(11) **EP 4 194 481 A1**
(43) Date of publication of application: **14.06.2023**
(21) Application number: 21213870.5
(22) Date of filing: 10.12.2021
(51) Int. Cl.: C08G 71/04, C08G 18/02

(54) **SELF-BLOWING ISOCYANATE-FREE POLYURETHANE FOAMS**

(71) Applicant: Université de Liège, 4000 Liège (BE)
(72) Inventor: DETREMBLEUR, Christophe, 4000 Liège (BE); GRIGNARD, Bruno, 4000 Liège (BE); BOURGUIGNON, Maxime, 4000 Liège (BE)
(74) Representative: V.O.

(57) **Abstract**

The present invention relates to a curable isocyanate-free formulation for preparing a polyurethane self-blowing foam comprising at least one multifunctional cyclic carbonate having at least two cyclic carbonate groups at the end of the chain (compound A), at least one multifunctional amine (compound B), water or/and a water source and optionally at least one catalyst (compound D), to a process for preparing said foams and to the thus obtained foams, to a process for recycling the obtained foams and to the thus recycled foams.

## Description

### TECHNICAL FIELD OF THE INVENTION

The present invention relates to a method for producing self-blowing isocyanate-free polyurethanes foams from reactive curable isocyanate-free polyurethane formulations, the products formed thereof and the formulations for use in said process. The present invention also relates to the process for recycling said foams and the products thereof.

### BACKGROUND OF THE INVENTION

Polyurethanes (PUs) are employed in a wide range of applications, notably in the form of foams. Depending on their composition, polyurethane foams can vary in structure from soft flexible foams to rigid foams used in insulation or structural materials.

Polyurethane foams derived from polyisocyanates are associated with environmental issues because isocyanate raw materials are classified as toxic.

Therefore, there is a need to develop greener and safer ways to produce sustainable PUs which are not derived from polyisocyanates. The synthesis of non-isocyanate polyurethanes (NIPUs) by copolymerization of a bicyclic carbonate monomer and a diamine represents one of the most promising alternatives to the conventional synthesis of PUs.

Recently, Detrembleur et al. showed that cyclic carbonates (used as monomers in the formulation of NIPU) underwent decarboxylation upon reaction with thiols using an appropriate catalyst such as an organobase and, in a formulation with multifunctional amines, could lead to self-blowing NIPU foams (Angew. Chem. Int. Ed. 2020, 59, 17033-17041 and WO2021004993). However, this process still suffers from drawbacks such as the use of thiols with a bad smell, the fact that unreacted thiol can diffuse out of the final foamed material and the difficulty to adapt the viscosity of the formulation prior to foaming. Furthermore, thiol compounds may be expensive reagents.

The present invention therefore seeks to provide an improved self-blowing formulation to prepare NIPU foams of varying density and good foam quality not showing the disadvantages of the prior art mentioned above, in particular a formulation with low-cost and non-toxic reagents, allowing control of the generation of the blowing agent. The present invention further seeks to provide a simple process to prepare NIPU foams from said self-blowing formulations that is easy to implement on an industrial scale with low cost products and that can be easily reprocessed.

### DESCRIPTION OF THE INVENTION

Surprisingly, we have now shown that water or/and a water source can be used instead of thiols (or in combination with thiols) in formulations containing cyclic carbonates and multifunctional amines to provide self-blowing non-isocyanate polyurethane foams (see reaction scheme below) while solving the above mentioned limitations and facilitating the preparation of high performance foams in an industrially relevant manner.

One advantage of using water over thiols and thiols precursors of the prior art is that water is cheap and odorless. Aminolysis of the cyclic carbonate (reaction enabling to form the NIPU chains) will occur simultaneously with the hydrolysis of the cyclic carbonate that releases the foaming agent (carbon dioxide).

Another advantage of the present process is that the hydrolysis of the cyclic carbonate, and thus the foaming, may be triggered by the addition of a catalyst and/or by applying an appropriate curing/foaming temperature, such as between 25°C to 180°C or between 40 to 160°C or between 60°C to 120°C.

A further advantage is that all components can be mixed together to obtain a formulation of appropriate viscosity prior to initiating the foaming when needed. Indeed, as the rates of aminolysis and hydrolysis of the cyclic carbonate are different and may depend on the type of catalyst when used, the aminolysis can be promoted prior to hydrolysis in order to increase the formulation viscosity or prior to foaming in order to obtain high quality foams. The use of water or/and a water source thus permits a better control of the viscosity of the formulation. Controlling the viscosity of the precursor mixture is generally an important parameter to allow for different applications as detailed hereafter.

Although thiols or/and masked thiol precursors are not needed for generating the blowing agent, it may be advantageous to use a combination of water with thiols or/and masked thiol precursors, which will contribute to generating different linkages (e.g. (thio)amides, (thio)urea, etc.) in the polymer. These additional linkages and content will contribute to the properties of the final foamed material.

As another important advantage compared to prior art formulations containing thiols, the use of an external catalyst is not always needed. Indeed, the multifunctional amine present in the formulation as a comonomer can also play the role of an intrinsic catalyst. The addition of a catalyst may however accelerate the foaming. In the prior art using thiols, the addition of a catalyst is mandatory for promoting the foaming. The inventors of the present invention have succeeded in providing such a formulation and process meeting all these needs.

According to one aspect of the present invention a curable isocyanate-free formulation for preparing a polyurethane self-blowing foam is provided, said formulation comprising at least one multifunctional cyclic carbonate having at least two cyclic carbonate groups at the end of the chain (compound A), at least one multifunctional amine (compound B), water or/and a water source and optionally at least one catalyst (compound D).

According to another aspect of the present invention a process for preparing a polyurethane self-blowing foam is provided comprising the steps of providing said formulation and curing it so as to promote the formation of CO₂ and form a non-isocyanate polyurethane foam.

According to yet another aspect of the present invention a non-isocyanate polyurethane foam is provided by said process using said formulation.

According to yet another aspect of the present invention a process for recycling said polyurethane foam by compression molding or extrusion is provided.

According to yet another aspect of the present invention a recycled polyurethane foam processed as film, coating, adhesive, fiber or as bulk material is provided.

The inventors found that cyclic carbonates undergo decarboxylation upon addition of water or/and a water source optionally in the presence of an appropriate catalyst, typically an (organo)base, within the NIPU formulation (mixture of polyamines and polycyclic carbonates), thereby generating in-situ the blowing agent leading to the formation of NIPU foams (see reaction scheme 1).

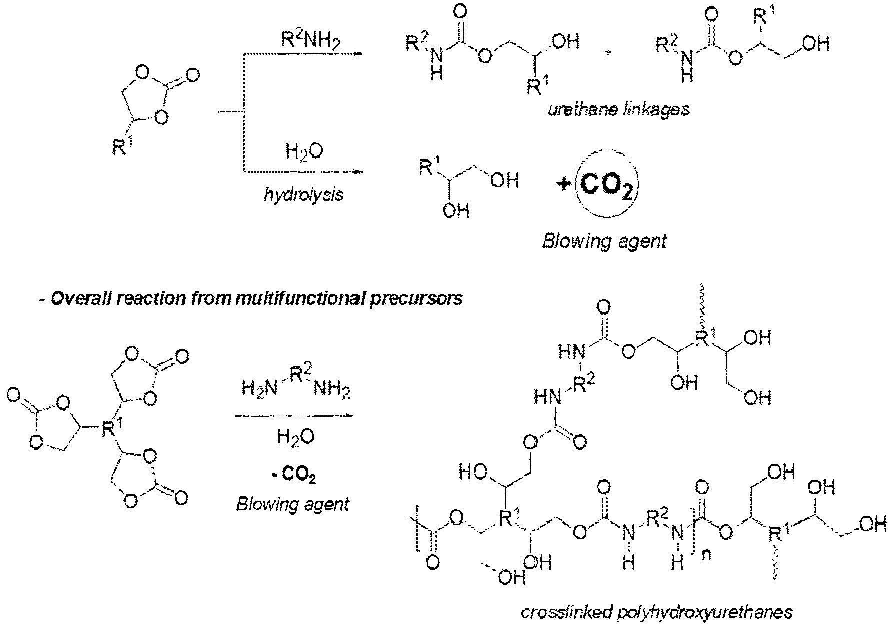

Reaction scheme 1: illustration of the aminolysis and hydrolysis of the cyclic carbonate, and the overall simplified reaction scheme for the formation of self-blowing NIPU foams from a mixture of a tricyclic carbonate, diamine and water.

The incorporation of water or/and a water source within the NIPU formulation surprisingly provides self-blowing NIPU foams generally at a temperature of from 25°C to 180°C, preferably from 40°C to 160°C, more preferably from 60°C to 120°C of which the density and mechanical properties may be adjusted by controlling water content, and carbonate/amine composition and structure. The formation of NIPU polymers occurs simultaneously with the hydrolysis and decarboxylation of the cyclic carbonate, promoting the expansion of the material upon heating generally within 1 min (e.g. at high temperature such as 160°C) to 24h, providing flexible to rigid foams with densities generally within the range of 10 kg/m³ to 800 kg/m³. The hydrolysis of the cyclic carbonate generates 1,2-diols within the NIPU structure and hydroxyurethane links. One also refers to polyhydroxyurethane (PHU). The structure of the NIPU foam of the present invention is therefore different to those of the state of the art.

The viscosity of the starting formulation can be adjusted by the choice and content of the reagents and/or additives such as plasticizers or fillers for example. It will be known by the skilled person that a molecule with a lower molar mass will lead to a lower viscosity and vice-versa. Controlling the viscosity of the formulation is generally an important parameter to allow the easy deposition of the formulation onto various substrates without using organic solvents. The NIPU formulation may be applied by any suitable means. Examples include the deposition with syringes, through pistols or injectors, through continuous processes, through reactive molding or reactive foaming, by spraying means, through extruders.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise.

The present invention will be described with respect to particular embodiments and with reference to certain drawings but the invention is not limited thereto but only by the claims.

The terms "about" or "approximate" and the like are synonymous and are used to indicate that the value modified by the term has an understood range associated with it, where the range can be +20%, +15%, +10%, +5%, or +1%. The term "substantially" is used to indicate that a result (e.g., measurement value) is close to a targeted value, where close can mean, for example, the result is within 80% of the value, within 90% of the value, within 95% of the value, or within 99% of the value.

In the following description, the expressions "isocyanate free" and "non-isocyanate" refer to compositions which do not contain polyisocyanates.

The term "ketone" denotes a C=O group.

The term "heteroatom" denotes an atom selected from N, O, S, Si and S(O)n (where n is 0, 1 or 2), SiO.

The term "alkyl" denotes a saturated hydrocarbon chain, for example a hydrocarbon chain from 1 to 20 carbon atoms.

The term "cycloalkyl" denotes a monovalent or bivalent 3 to 8 membered carbon ring, for example cyclopropyl, cyclobutyl, cyclopentyl, cyclohexyl, cycloheptyl or cyclooctyl.

The term "heterocycle" denotes monovalent or bivalent non-aromatic mono- or bi-cyclic radical of four to nine ring atoms in which one to three ring atoms are heteroatoms independently selected from N, O and S(O)n (where n is 0, 1 or 2), with the remaining ring atoms being C. Particular is piperidyl or a cyclic carbonate.

The term "aryl" denotes a monovalent or bivalent aromatic carbocyclic group containing 6 to 14, particularly 6 to 10, carbon atoms and having at least one aromatic ring or multiple condensed rings in which at least one ring is aromatic. Examples include phenyl, benzyl, naphthyl, biphenyl, anthryl, azalenyl or indanyl.

The term "heteroaryl" denotes a monovalent or bivalent cyclic aromatic group containing 1, 2 or 3 heteroatoms, having at least one aromatic ring or multiple condensed rings in which at least one ring is aromatic. The aromatic ring may be a 6 membered ring, such as pyridinyl, or a 5-membered ring, such as thiazolyl, isoxazolyl, isothiazolyl, oxadiazolyl, imidazolyl, triazolyl or thiadiazolyl.

The formulation of the present invention comprises at least one multifunctional cyclic carbonate having at least two cyclic carbonate groups at the end of the chain (compound A), at least one preferably aliphatic, multifunctional amine (compound B), water or/and a water source and optionally at least one catalyst (compound D).

Advantageously, the curable formulation of the invention is a liquid or a viscous liquid at ambient temperature (25 °C). Preferably, the viscosity of said curable formulation is lower than or equal to 20 000 mPa.s at 50°C, more preferably lower than 10 000 mPa.s at 50°C, most preferably lower than 5 000 mPa.s at 50°C as measured with an oscillatory rheometer, with oscillatory frequency sweep at 50°C, 5% deformation, 100-0.1 rad s⁻¹. In case the curable formulation is not a liquid or a viscous liquid at ambient temperature it is rendered liquid by heating to a temperature of between 40 and 80°C.

Compound A is chosen from multifunctional cyclic carbonates having at least two cyclic carbonates at the end of the chain (or so-called multifunctional external cyclic carbonates) or a mixture thereof. In general, said compounds A correspond to formula (I) 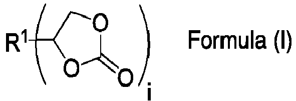 wherein
i is an integer higher than or equal to 2, in particular from 2 to 10, more particularly 2 or 3,
R¹ is a carbon bond between the cyclic carbonate rings or is a linear or
branched hydrocarbon chain, which may be unsubstituted or substituted and wherein one or several hydrocarbon groups of said hydrocarbon chain may be replaced by a heteroatom, a ketone, a cycloalkyl, a heterocycle, an aryl or a heteroaryl, each of which may be unsubstituted or substituted, said hydrocarbon chain having at least 2 carbon atoms, in particular from 3 to 60 carbon atoms.

Suitable examples of compounds A for use in the present invention may be found in patent application WO2021004993, incorporated herein by reference.

Particularly preferred compounds A are

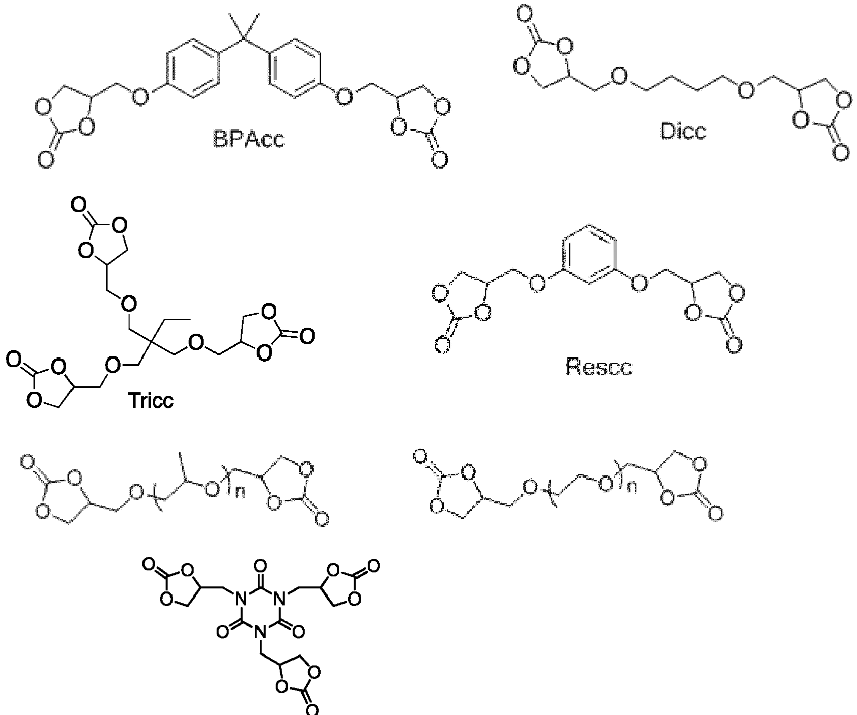

Compound B is chosen from multifunctional amines or a mixture thereof. In general, said compounds B correspond to formula (II) R²-(NHR')ⱼ Formula (II) wherein
j is an integer higher than or equal to 2, in particular from 2 to 6,
R² is an aryl or a heteroaryl, each of which may be unsubstituted or substituted, or a linear or branched hydrocarbon chain, which may be unsubstituted or substituted, and wherein one or several hydrocarbon groups of said hydrocarbon chain may be replaced by a heteroatom, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, and wherein R' each independently may be hydrogen, an alkyl or a cycloalkyl.

Compound B acts as a hardener by reacting with cyclic carbonate groups of compounds A, and optional compounds E and F as described hereinafter, thereby cross-linking the cyclic carbonate chains to each other.

Compound B can also act as a catalyst by increasing the basicity of the formulation. The amine is able to trap a proton from water, thereby yielding OH- ions. Amines with a pKa of 9 or higher are preferred to enable this role of catalyst, for example a pKa of 11 of higher, preferably a pKa of 15 or higher, more preferably a pKa of 20 or higher.

Examples of suitable compounds B for use in the present invention can be found in patent application WO2021004993, incorporated herein by reference.

The use as compound B of multifunctional amine with long chain segments and/or a low number of -NH₂ functionalities (such as 1,6-diaminohexane or Priamine ^{®} 1074) will yield flexible foams, while the use of polyamines with short chain segments and/or a high number of -NH₂ functionalities (such as Lupasol ^{®} FG, isophorone diamine or m-xylylenediamine) will yield rigid foams.

Alternatively, secondary multifunctional amines can also be used instead of primary ones, or be used in combination with primary ones.

Particularly preferred compounds B are 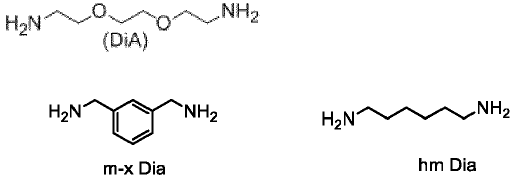 and 1,2 cyclohexanediamine (CyH Dia). In the latter case, the amine is a secondary amine. Secondary amines are less reactive than primary amines towards cyclic carbonates. A lower reactivity rate may be interesting to slow down the crosslinking and hence to favor the hydrolysis rate versus the aminolysis rate. It may be advantageous to have a lower reactivity rate for aminolysis when performing the foaming reaction at a lower temperature such as below 80°C.

Water used may be distilled water or tap water. Neutral water (pH = 7) or basic water (pH > 7) is preferred, although acid water (pH < 7) can also be used. Water can be introduced alternatively or additionally in the formulation through a water source.

By a water source, one means any compound, liquid, solid or gaseous containing water and/or releasing water upon heating so that it can trigger hydrolysis of compound A.

An example of a suitable water source is a hydrate. A hydrate may be defined as a compound that absorbs water molecules from its environment and includes them as part of its structure. Hydrates include inorganic or organic salts and mixtures thereof.

Examples of suitable hydrates include: sodium carbonate decahydrate Na₂CO₃·10H₂O, magnesium sulphate heptahydrate (MgSO₄.7H₂O), sodium tetraborate decahydrate (Na₂B₄O₇·10H₂O borax), and sodium sulphate decahydrate (Na₂SO₄·10H₂O), sodium pyrophosphate decahydrate Na₄P₂O₁·10H₂O, copper sulfate trihydrate (CuSO₄·3H₂O), copper sulphate pentahydrate (CuSO₄.5H₂O), cobalt (ll) chloride hexahydrate (CoCl₂·6H₂O), the double salts known collectively as alums (M⁺²SO₄·M⁺³₂(SO₄)₃·24H₂O, where M⁺ is a monopositive cation, such as K⁺ or NH₄⁺, and M³⁺ is a tripositive cation, such as Al³⁺ or Cr³⁺), lithium chloride hydrate (LiCl xH₂O), hydrotalcite (Mg₆Al₂(CO₃)(OH)₁₆.4H₂O) and mixtures thereof. Organic salts may include hydrated ammonium, imidazolium or phosphonium salts and mixtures thereof.

Preferred hydrates are sodium tetraborate decahydrate, sodium pyrophosphate decahydrate, hydrotalcite.

A water source may also be the air humidity. A water source may also be contained in hygroscopic reagents, such as hygroscopic macromolecules such as polyethylene glycol for example. A water source can also be a suspension of colloidal silica particles such as those from Ludox^{®} for example.

Instead of water or in addition to water, an alcohol may also trigger the foaming process in a similar way as water. By alcohol one means R-OH wherein R is an alkyl group preferably containing 1 to 20 carbon atoms, which may be substituted with further hydroxyl group. Examples include methanol, ethanol, isopropanol or any other type of alcohol. It will however be understood that the curing temperature may be higher with alcohol than with water.

Apart from the essential components compound A, compound B and water or/and a water source, the formulation of the present invention can also contain any one or two of more of the following optional components: compound C, compound D, compound H.

Optional compound C is chosen from masked thiol precursors, which may be monofunctional or polyfunctional or a mixture of one or more of such masked thiol precursors. The masked thiol precursor for use according to the present invention can be any compound in which the thiol functional group is initially masked but which can easily be formed in-situ. Preferably said masked thiol precursors are cyclic compounds. In general, said compounds C correspond to formula (III) or formula (IV) or formula (V) or formula (VI) 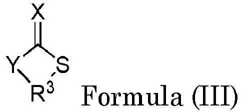 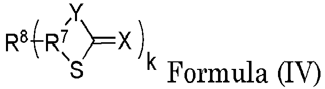 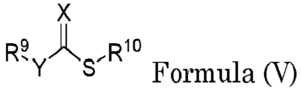 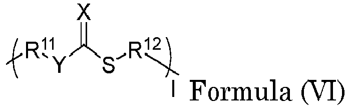 wherein
k is an integer higher than or equal to 2, in particular from 2 to 6,
l is an integer higher than or equal to 2, in particular from 2 to 1000, X is O or S,
Y is O, S, NR⁴, CR⁵R⁶,
R³ is a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, said hydrocarbon chain including carbon and hydrogen atoms wherein the carbon groups are linked through single or double bonds,
R⁴ is hydrogen or a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms,
R⁵ and R⁶ are identical or different and are hydrogen or a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, R⁵ and R⁶ together may form a cyclic structure,
R⁷ is a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms,
R⁸ is a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R⁸ is a linear or branched polymeric group,
R⁹ and R¹⁰ are identical or different, and are a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R⁹ or/and R¹⁰ is/are a linear or branched polymeric group,
R¹¹ and R¹² are identical or different, and are a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms.

Particularly preferred compounds C are

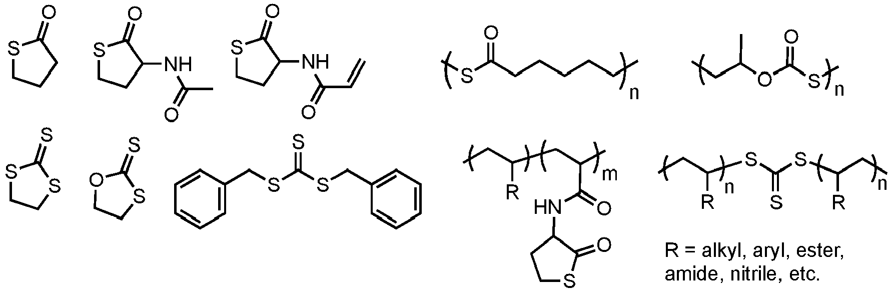

Compound C may for example be added in order to adjust the viscosity of the mixture and/or the final properties of the foam.

Optional compound D, the catalyst, is used to increase the kinetics of the carbonate/amine reaction (thus the formation of NIPU) and the hydrolysis of the cyclic carbonate and thus the foaming. It has been observed that multifunctional amine can act as a suitable catalyst of the hydrolysis reaction. In some cases however it will be preferred to add a separate catalyst to accelerate the curing and foaming of the formulation and to obtain a more expanded foam. But suitable foams can also be obtained in some cases without using a catalyst.

A wide range of catalysts can be used (see for instance Blain et al., Green Chemistry 2014, 16, 4286). The choice of suitable catalyst depends on the specific formulation used but also on the temperature used to form the foam. As non-limiting examples, compound D can be chosen from amine catalysts, such as triazabicyclodecene (TBD), 1,4-diazabicyclo[2.2.2]octane (DABCO), 1,8-diazabicyclo[5.4.0]undec-7-ene (DBU), 7-methyl-1,5,7-triazabicyclo[4.4.0]dec-5-ene (MTBD), or other guanidines and amidines, trimethylhydroxyethyl ethylene diamine, trimethylaminopropylethanolamine, dimethylethanolamine, bis(2-dimethylaminoethyl) ether, triethylenediamine, dimethylaminocyclohexane, N-methyl morpholine, dimethylaminopyridine (DMAP), triethylamine (NEt₃), trimethylamine, phosphazenes, phosphines (triaryl and trialkylphosphines).

The compound D may also be chosen from ionic salts or ionic liquids composed of a combination of a cation and an anion. The cation may be selected from alkali metals such as Na⁺, Li⁺, K⁺, Cs⁺ or other metal such as described in WO2021004993, incorporated herein by reference.

Other suitable compounds D include inorganic bases such as hydroxides, metal hydroxides, carbonates, hydrogenocarbonates, phosphates, hydrogenophosphates, borates, pyrophosphates. Suitable compounds D are also metal salts of inorganic acid or organometallic catalysts such as stannous octoate, lead octoate, dibutyltin dilaurate, potassium acetate or potassium ethyl-hexoate, or mixtures thereof. Further suitable compounds D include phosphines such as triarylphosphines and monoalkylbiarylphosphines, bases, thioureas, phosphazenes, carbenes or masked carbenes (as described by Taton et al in "N-Heterocyclic carbenes (NHCs) as organocatalysts and structural components in metal-free polymer synthesis", Chem. Soc. Rev. 2013, 42, 2142).

Mixtures of several different catalysts, of the same class or not, may also be used.

Particularly preferred catalysts for use as compound D in the present invention are 1,8-diazabicyclo[5.4.0]undec-7-ene (DBU), tetrabutyl ammonium oxalate, tetrabutyl ammonium phenolate (TBAP), tetrabutyl ammonium hydroxide, potassium carbonate, cesium carbonate and potassium or sodium phosphate (mono, di or tribasic forms), potassium or sodium or calcium hydroxide, sodium tetraborate., sodium pyrophosphate.

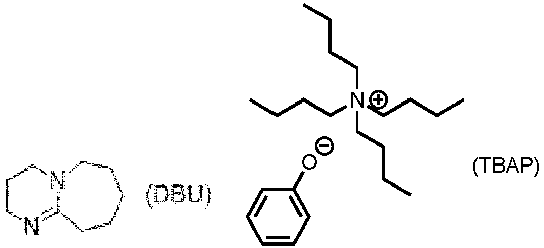

Hydrated inorganic bases can also be used to catalyze the reaction and do not necessarily require the addition of water or/and a water source. Preferred hydrated inorganic bases are sodium tetraborate decahydrate, sodium pyrophosphate decahydrate, sodium phosphate dodecahydrate. In the following, these hydrated inorganic bases are called hydrated catalysts. Such hydrated catalysts hence can perform a dual function, as catalyst and as water source.

Optionally the formulation of the present invention may further contain multifunctional thiols (compounds H). Compound H is chosen from multifunctional thiols or a mixture thereof. In general, said compounds H correspond to formula (XII)

R²⁶(-SH)ᵣ Formula (XII)

wherein
r is an integer higher than or equal to 2, in particular from 2 to 6,
R²⁶ is a linear or branched hydrocarbon chain, which may be unsubstituted or substituted, and wherein one or several hydrocarbon groups of said hydrocarbon chain may be replaced by a heteroatom, a ketone, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R²⁶ is a linear or branched polymeric group.

Examples of suitable compounds H for use in the present invention may be as specified in patent application WO2021004993, incorporated herein by reference. Examples may include bi-thiols, tri-thiols, tetra-thiols or hexa-thiols, preferably pentaerytrittetrathiol, thiol trimethylol propane, tris[2-(3-mercaptopropionyloxy)ethyl] isocyanurate, pentaerythritol tetra (3-mercaptopropionate), trimethylolpropane tri (3-mercaptopropionate), pentaerythritol tetrathioglycolate and/or trimethylolpropane thioglycolate, tris [2-(3-mercaptopropionyloxy)ethyl] isocyanurate. Compound H can also be a telechelic, branched or multiarms polymer bearing thiol groups at each chain-end (such as polyethylene glycol dithiol or polypropylene glycol dithiol) or along the polymer backbone as pendant groups, or a peptide or protein containing at least two thiols, or kraft lignin.

Particularly preferred compounds H, which also have the benefit of having almost no odor, are

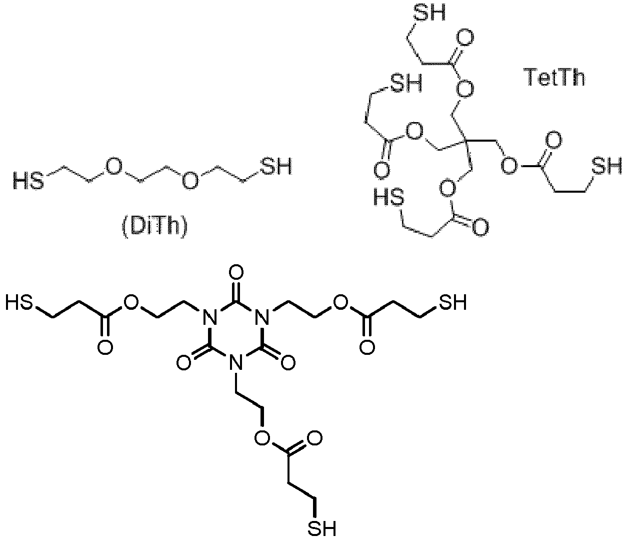

Optionally the formulation of the present invention may further contain any one of or a mixture of monofunctional cyclic carbonate (compound E), multifunctional cyclic carbonates having at least two cyclic carbonate groups within the chain (compound F), monofunctional thiols (compound G), and polyepoxides (compound I). Such optional compounds may be as specified in patent application WO2021004993, incorporated herein by reference.

Compound E generally acts as a reactive diluent and is chosen from monofunctional cyclic carbonates or a mixture thereof, which preferably correspond to formula (VII) or a mixture thereof. 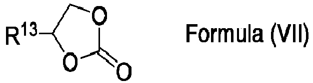 wherein
R¹³ is hydrogen or an aryl or a linear or branched hydrocarbon chain, which may be unsubstituted or substituted e.g. with a functional group such as an alcohol, a secondary or tertiary amine, a carboxylic acid, an alkene, an ester, etc. and wherein one or several hydrocarbon groups of said hydrocarbon chain may be replaced by a heteroatom, a cycloalkyl, an aryl or a heterocycle, each of which may be unsubstituted or substituted, said hydrocarbon chain having at least 1 carbon atom, in particular from 2 to 60 carbon atoms, more particularly from 2 to 20 carbon atoms, even more particularly from 2 to 15 carbon atoms.

Suitable examples of compounds E for use in the present invention are ethylene carbonate, propylene carbonate, 4-vinyl-1,3-dioxolan-2-one, etc.

Compound F contributes to the formation of the NIPU matrix; due to sterical hindrance by the internal cyclic carbonates it reacts more slowly than compound A. Compound F is chosen from multifunctional internal cyclic carbonates thus having at least two cyclic carbonate groups within the chain (so-called internal cyclic carbonates) or any mixture thereof. Examples of suitable compounds F are: 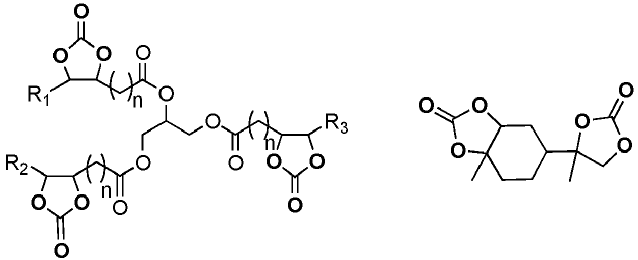 Compound G also reacts with the cyclic carbonate to generate CO₂ but will not crosslink the matrix due to its monofunctionality and allows to graft interesting groups to NIPU. Compound G is chosen from monofunctional thiol or any mixture thereof, and preferably corresponds to formula (XI)

R²⁵-SH Formula (XI)

wherein:
R²⁵ is an aryl group which may be unsubstituted or substituted or a linear of branched polymeric group or a polydialkyl siloxane chain or a linear or branched hydrocarbon chain which may be unsubstituted or substituted e.g. with a functional group such as alcohol, primary, secondary or tertiary amine, carboxylic acid, ester, etc., and wherein one or several hydrocarbon groups of said hydrocarbon chain may be replaced with an aryl, a heteroatom, a ketone, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms.

Compound G can be any monofunctional thiol but monofunctional thiol of high boiling point is preferred. Thioamines such as cysteamine or cysteine are also preferred because the thiol group contributes to the formation of the blowing agent and to the formation of the thioether linkage, and the amine group contributes to the formation of the urethane linkage.

Compound I is chosen from polyepoxides or a mixture thereof and will contribute to the crosslinking of the material.

Some specific examples of compound I are illustrated below.

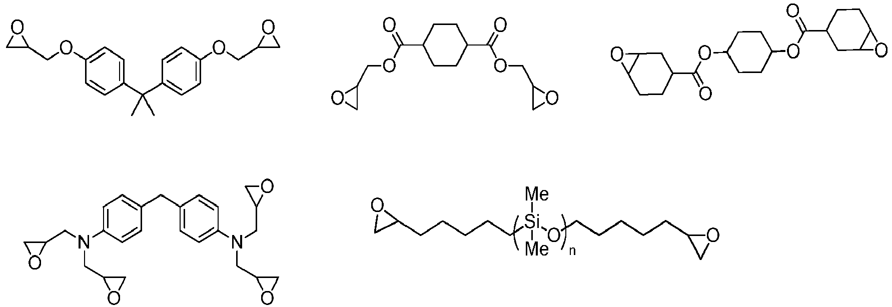

A particularly preferred compound I is

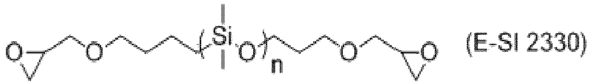

The amount of compound A generally ranges from 18 wt% to 80 wt%, in particular from 40 wt% to 80 wt %, more in particular from 50 to 80 wt%, the percentage being expressed relative to the total weight of the formulation.

It may be preferred to mix two or more of compounds A to reach the amount recited above.

The amount of compound B generally ranges from 10 wt% to 80 wt%, in particular from 10 to 70 wt%, more in particular from 10 wt% to 50 wt %, the percentage being expressed relative to the total weight of the formulation.

The amount of water or/and water provided by the water source present in the formulation generally ranges from 0.05 wt% to 50 wt%, in particular from 0.1 wt% to 20 wt%, in particular from 0.1 to 10 wt%, in particular from 0.1 to 5 wt%, more in particular from 0.5 wt% to 3 wt %, the percentage being expressed relative to the total weight of the formulation.

A source of water may also be the air humidity or the water entrapped in one or more of the reagents. For example, it may come from hygroscopic reagents or from hydrates. Macromolecules such as for example polyethylene glycol may also contain an amount of water sufficient to induce hydrolysis of the formulation of present invention.

An amount of hydrate when present in the formulation as a water source may generally ranges from 0.05 wt% to 50 wt%, preferably from 0.1 wt% to 20 wt%, more preferably from 1 to 15 wt%. The amount of water contained in the water source such as the hydrate may for example be determined through a thermogravimetry analysis of the water source. The weight loss below 100°C determined by thermogravimetry may hence be used to calculate the amount of water introduced in the formulation through the analyzed water source.

An amount of hydrates when present in the formulation as a catalyst may generally range from 0.1 to 15 wt%.

The molar ratio between compound A, compound B and water will affect the foaming of the formulation and the properties of the obtained foams. According to a preferred embodiment of the present invention an excess of cyclic carbonate groups (from compound A) with respect to amine groups (from compound B) is preferred, the excess of cyclic carbonates being used for reacting with water and thus for the generation of the foaming agent. A typical amine/cyclic carbonate molar ratio is 0.75. Other ratios can be used to modulate the foam properties, such as for example a molar ratio of 0.5, 1.0 or 1.25.

The molar ratio of the water and/or the water source to cyclic carbonate groups (from compound A) is preferably between 0.05 and 5.0, more preferably between 0.1 and 2.0. A molar ratio below 1.0 such as for example 0.25 is suitable at a curing temperature above 80°C while a higher molar ratio such as 2.0 may be preferred at a curing temperature below 80°C.

If present, the amount of compound D generally ranges from 0.1 wt% to 50 wt%, in particular from 0.5 wt% to 25 wt %, and more particularly from 0.5 wt% to 10 wt%, the percentage being expressed relative to the total weight of the formulation.

If present, the amount of compound H generally ranges from 1 wt% to 50 wt%, in particular from 2 wt% to 20 wt%, more in particular from 2 wt% to 15 wt %, the percentage being expressed relative to the total weight of the formulation.

If present, the amount of compound C generally ranges from 1 wt% to 60 wt%, in particular from 2 to 40 wt%, more in particular from 5 to 20 wt %, the percentage being expressed relative to the total weight of the formulation.

The amount of compound E, a monofunctional cyclic carbonate, generally ranges from 0 wt% to 50 wt%, in particular from 1 wt% to 50 wt%, more in particular from 5 wt% to 10 wt %, the percentage being expressed relative to the total weight of the formulation.

The amount of compound F, a multifunctional cyclic carbonate having at least two cyclic carbonate groups within the chain, generally ranges from 0 wt% to 50 wt%, in particular from 1 wt% to 50 wt%, more in particular from 2 wt% to 20 wt %, the percentage being expressed relative to the total weight of the formulation.

The amount of compound G, a monofunctional thiol, generally ranges from 0 wt% to 50 wt%, in particular from 1 wt% to 50 wt%, more in particular from 2 wt% to 10 wt %, the percentage being expressed relative to the total weight of the formulation.

The amount of compound I, a polyepoxide, generally ranges from 0 wt% to 50 wt%, in particular from 0.1 wt% to 50 wt%, more in particular from 0.5 wt% to 20 wt %, the percentage being expressed relative to the total weight of the formulation.

The formulation of the present invention is generally obtained by mixing the ingredients, compounds A, B, water and/or a water source, optionally D, optionally H and further optionally C, E, F, G and I at a temperature of between 15 and 90°C, preferably between 20 and 80°C, and more preferably between 25 and 60°C. The mixing can be performed using any suitable mixing equipment, including static mixing equipment, impingement mixing equipment, or other suitable mixing equipment.

Although CO₂ blowing agent is generated in-situ the formulation of the present invention may contain additional chemical or physical blowing agent. In particular physical blowing agent may be added, especially when NIPU foams with high thermal insulation performance are targeted. Examples of such suitable physical blowing agents include any of the physical blowing agents used to formulate thermal insulating foams such as alkanes (e.g. pentane), cycloalkanes (e.g. cyclopentane) and hydrofluoroalkanes. A preferred nonflammable liquid hydrofluorocarbon with no ozone depletion potential is Solkane 365/227 or Solvokan. The amount of these additional blowing agents ranges from 0 wt% to 70 wt%, preferably between 10 wt% and 30 wt%, the percentage being expressed relative to the weight of the formulation. These blowing agents are added to the formulation containing all the other ingredients generally at a temperature between 10 to 30°C in order to avoid complete vaporization of the blowing agent before effective mixing with the reaction mixture.

The reaction mixture may further contain optional ingredients such as plasticizers, organic and/or inorganic fillers, colorants, preservatives, odor masking agents, flame retardants, smoke suppressants, thixotropic agents, mould release agents, surfactants, foam stabilizers, biocides, antioxidants, UV stabilizers, antistatic agents or foam cell nucleators. Fillers may be clays or silica particles. Such fillers may also be provided in a water suspension, whereby the filler may also be the water source.

Inorganic or organic fillers may also be used to catalyze the foaming reaction.

Stabilizers may be used to stabilize the NIPU foams. Suitable stabilizers are reactive polydimethylsiloxane and polyethylene oxide. Fillers may also be added, such as silica, clays, cellulose nanowhiskers, carbon black, carbon nanotubes, graphene, etc. The addition of fillers may advantageously create nucleation nodes for the control of the foam density and size distribution of the cells (from a few nm to 1-2 mm). Fillers may also improve the mechanical performance of the foams. Foams containing fillers are referred to as nanocomposite foams. Fillers can be functionalized by appropriate reactive groups such as epoxides, amines, cyclic carbonates, masked thiol precursors or thiols making them reactive.

The mechanical performance of the foams (from flexible to rigid materials) may also be adjusted by selecting suitable structure of cyclic carbonates (compounds A, E, F) and/or amines (compound B) and/or masked thiol precursors (compound C) and/or thiols (compounds G and H) and/or polyepoxides (compound I).

According to the invention, the blowing agent (CO₂) is formed by hydrolysis of cyclic carbonates (compounds A and if present E and F) optionally in the presence of a catalyst (compound D). Beside the production of the blowing agent, this reaction leads also to the formation of 1,2-diols. The content of CO₂ (and thus the foam density) and 1,2-diols produced can be adapted by the content of water and/or water source added to the formulation.

According to the invention, a curable isocyanate-free formulation for preparing a polyurethane self-blowing foam may comprise compound A, compound B, water or/and a water source, optionally compound D; wherein A and B may have been optionally pre-mixed or pre-cured.

The formation of the blowing agent generally occurs at a temperature of between 25°C and 180°C, preferably between 40 and 160°C, preferably between 40 and 120°C and more preferably between 60 and 120°C or between 40 and 95°C.

It will be understood by the person skilled in the art that under high temperature (such as above 100°C) some physical blowing may occur through evaporation. Foaming conditions are however preferably in favour of chemical blowing only or as a major blowing process.

According to another aspect of the present invention a process for preparing a self-blowing non-isocyanate polyurethane foam is provided comprising the steps of providing a formulation as described above by mixing compounds A, B, water or/and a water source and optionally other additives, optionally in the presence of compound D so as to form a viscous mixture and curing said formulation so as to promote the formation of CO₂ and form a non-isocyanate polyurethane foam.

It is advantageous that all compounds can be mixed at once and that reaction may occur fast after such mixing. Mixing is then performed for a few minutes only, such as from 1 to 10 minutes only.

The curing and the expansion of the polymer matrix occur simultaneously and can be achieved within a relatively short time after the mixing of the ingredients (between 10 seconds to 24 hours) and leads to a homogeneous foam. Although the foaming can be fast (1 min to few hours), the expanded reaction mixture can be cured for a longer time (2 to 24 h) by heating until it is in tack free state. Curing to a tack-free state generally takes place within few minutes, such as within 5 minutes, to few hours such as from to 2 to 4 hours. It should be understood that the time can be dependent on the temperature and vice-versa.

The curing and expansion generally occur at a temperature of between 25°C and 180°C, preferably between 40 and 160°C and more preferably between 40°C to 120°C, more preferably between 60°C to 120°C or between 40 and 95°C.

Optionally, compounds C, E, F, G, H and/or I can be added to the ingredients in the first step of the process in order to adjust the viscosity of the mixture and/or the final properties of the foam. These compounds may be added independently from each other or may be added in the form of a mixture.

According to another embodiment of the present invention the process for preparing a self-blowing non-isocyanate polyurethane foam comprises the steps of (1) mixing compounds A and B optionally in the presence of compound D so as to form a viscous mixture, (2) partially curing said mixture so as to form a non-isocyanate polyurethane viscous prepolymer, (3) adding water or/and a water source to said prepolymer and curing the said mixture so as to form a non-isocyanate polyurethane foam. Optionally, compounds C, E, F, G, H and/or I can be added to the ingredients in the first step of the process or in step 3.

By partially curing is here meant the increase of viscosity of the formulation at a given temperature. The viscosity may for example be increased by a factor 10, by a factor 100, or even by a factor 1000 depending on the time and temperature of pre-curing as well as on the ingredients mixed. It also means that compounds A and B may start to be cross-linked. After partially curing, it is still possible to mix the compounds and/or to add a further compound. Such mixing after a partially curing may be a manual mixing or a mechanical mixing. The viscosity may be obtained by rheological measurements for example. The step of partially curing may for example be for 4 hours at ambient temperature. Viscosity may for example be increased up to 10 000 Pa.s.

According to a further embodiment of the present invention the process involves mixing compounds A and B in the presence of water or/and a water source so as to form a viscous mixture, partially curing said mixture so as to form a viscous prepolymer, optionally adding compound D to said prepolymer mixture and curing said mixture so as to promote the formation of CO₂ and form a non-isocyanate polyurethane foam. Optionally, compounds C, E, F, G, H and/or I can be added to the ingredients in the first step of the process in order to adjust the viscosity of the mixture and/or the final properties of the foam.

According to a further embodiment of the present invention the process involves mixing compounds A and B in the presence of water or/and a water source so as to form a viscous mixture, optionally adding compound D to said mixture, and curing said mixture so as to promote the formation of CO₂ and form a non-isocyanate polyurethane foam. Optionally, compounds C, E, F, G, H and/or I can be added to the ingredients in the first step of the process in order to adjust the viscosity of the mixture and/or the final properties of the foam.

The formation of the prepolymer occurs by curing generally at a temperature of between 25°C and 200°C, preferably between 25 and 150°C and more preferably between 40 and 120°C. This step is stopped before the polymer is fully crosslinked, thus when the mixture remains viscous.

Water or/and the water source is added and mixed to the ingredients generally at a temperature between 15 and 90°C, preferably between 20 and 80°C and more preferably between 25 and 60°C.

The final curing and expansion of the foam generally occurs at a temperature between 25°C and 180°C, preferably between 40 and 160°C and more preferably between 60°C and 120°C or between 40 and 95°C.

The process of the present invention provides the following advantages: no volatile organic compounds are released, no organic solvents are used, the process is cost effective. Further the present process is compatible with existing manufacturing processes for conventional PU foaming.

According to a third aspect of the present invention a non-isocyanate polyurethane foam is provided obtainable by said process.

The obtained polyurethane foam contains urethane linkages and also thioethers if thiols are present in the formulation, or additional linkages when masked thiol precursors are used with a nature that depends on the type of masked thiol precursor. The contents of the different linkages are fixed by the content of amine, cyclic carbonate, water, optionally thiol, and optionally masked thiol precursor.

The process of the invention makes it possible to prepare flexible and rigid foams over a wide range of densities. The foam of the invention can be of high density (higher than 80 kg/m³) or of low density (lower than or equal to 80 kg/m³). The density of the foam of the invention can be less than 800 kg/m³, in particular from 10 kg/m³ to 400 kg/m³, or from 20 kg/m³ to 200 kg/m³.

The foam pore sizes are generally lower than 5000 µm, in particular lower than 1000 µm.

Preferably, the foams of the invention have a glass transition temperature from -40°C to 200°C.

The compression modulus of the foams of the invention can be from 0.005 MPa to 1000 MPa, in particular from 0.02 MPa to 200 MPa. The compression modulus is measured on an instron machine (5566) in compression mode at a rate of 1 mm/min. The slope of the strain/stress curve in the elastic regime is used to calculate the compression modulus.

The NIPU foams according to the present invention can be used in any sector wherein traditional PU foams can be used, for example in the automotive, aeronautic, building, housing, footwear and health sector. Suitable applications include sandwich panels for thermal insulation (building and transportations insulations) and/or acoustic insulation foams for wellness (mattress, furniture, seats, cars), gasket in foam/adhesion joints for sealing (concrete, glass, metals, wood), joints for car or building windows and for fixing solar cell panels, or as air filters for indoor air purification.

The viscous reactive and/or curable formulations of the present invention may be applied onto various substrates (metal, wood, glass, textiles...) using syringes or sprayers. The present formulations may also be used with continuous reactive extrusion-foaming or in reactive injection-molding. The formulation of the present invention may also be sprayable and cured in a second step. The formulation of the present invention may also be used for 3D printing for the construction of 3D foamed materials.

According to another aspect of the present invention, a process for recycling the obtained polyurethane foam is provided by compression molding or extrusion.

The NIPU foams according to the present invention can be easily recycled or repurposed to give them another life for other types of applications. The NIPU foams can be reprocessed by compression molding under thermal treatment or by extrusion (molding). Optionally a previous grinding step may be performed.

The reprocessing temperature of NIPU foams is generally between 100 and 250°C, preferably between 120 and 200°C, and more preferable between 140 and 180°C.

Advantageously, the recycling process, also referred to as reprocessing, is possible without any solvent addition and/or without any metallic reagents.

According to another aspect of the present invention, a recycled polyurethane foam is provided by said recycling the process.

Using these processes, the recycled foams subsequently can be processed as films, coatings, adhesives, fibers or as bulk materials by conventional processing techniques well-known by person of the art. Mixtures of NIPU foams of different properties can also be used to produce novel NIPU materials by applying the processing techniques described above. Their properties can be easily modulated by the nature of the NIPU foams that are mixed and by their content/composition.

The invention is illustrated by but not limited to the following examples.

### DESCRIPTION OF FIGURES

Figure 1 is a micrography by Scanning Electron Microscopy (SEM) of the foam obtained in example 1, sample c.
Figure 2 is a SEM image of the foam obtained in example 2.
Figure 3 is a SEM image of the foam obtained in example 3.
Figure 4 is a SEM image of the foam obtained in example 4.
Figure 5 is a SEM image of the foam obtained in example 5.
Figure 6 is a SEM image of the foam obtained in example 6.
Figure 7 is a SEM image of the film obtained after foam reprocessing in example 16.

### EXAMPLES

The following examples illustrate the formation of self-blowing NIPU foams induced by water from the following precursors:

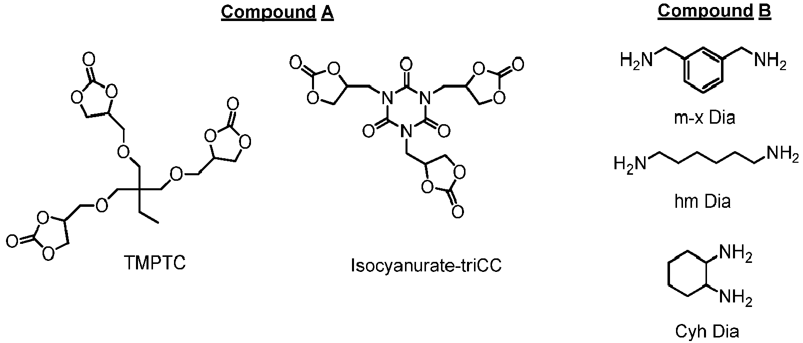

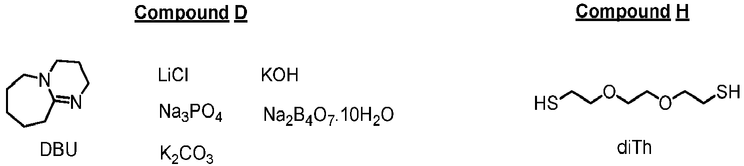

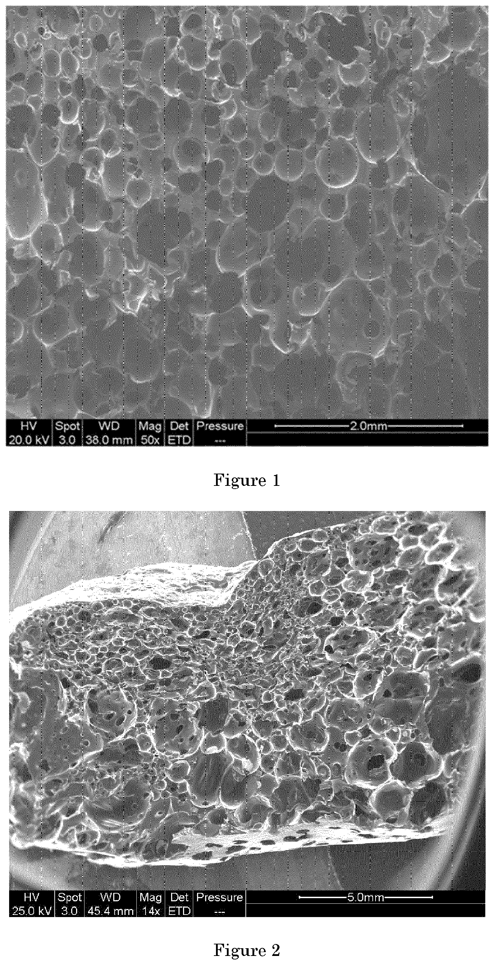

Example 1: The following example illustrates the use of different catalysts (compound D) for foaming. A mixture of compound A (TMPTC, 0.8 g, and isocyanurate-triCC, 0.2 g), compound B (m-x Dia, 0.350 g), compound D selected from Na₃PO₄ or K₂CO₃ or LiCl or DBU (5 mol% vs cyclic carbonate) and water (0.031 g) was placed in a silicon mold and stirred at room temperature for 1 minute. The reactive mixture was cured 3h at 100 °C. A rigid foam was obtained. Density of the different foams was measured by cutting the foam in a cube of 10mm x 10mm x 10mm and weighing such cube. Results are presented in the table below. An image of sample c obtained by Scanning Electron Micrography (SEM) is presented in Figure 1.

| Sample | Compound D | Mass (g) | Density (Kg/m³) |
|---|---|---|---|
| a | Na₃PO₄ | 0.057 | 243 |
| b | K₂CO₃ | 0.048 | 283 |
| c | LiCl | 0.015 | 260 |
| d | KOH | 0.018 | 378 |
| e | DBU | 0.051 | 164 |

Example 2: A mixture of compound A (TMPTC, 1g, 69.7 wt%), compound B (m-x Dia, 0.350g, 24.4 wt%), compound D (DBU, 0.052g, 3.6 wt%) and water (0.031g, 2.2wt%) was placed in a silicon mold and stirred at room temperature for 1 minute. The reactive mixture was placed in an oven at 100 °C for 3h. A rigid foam was obtained with a density of 265 Kg/m³. A SEM image is presented in Figure 2.

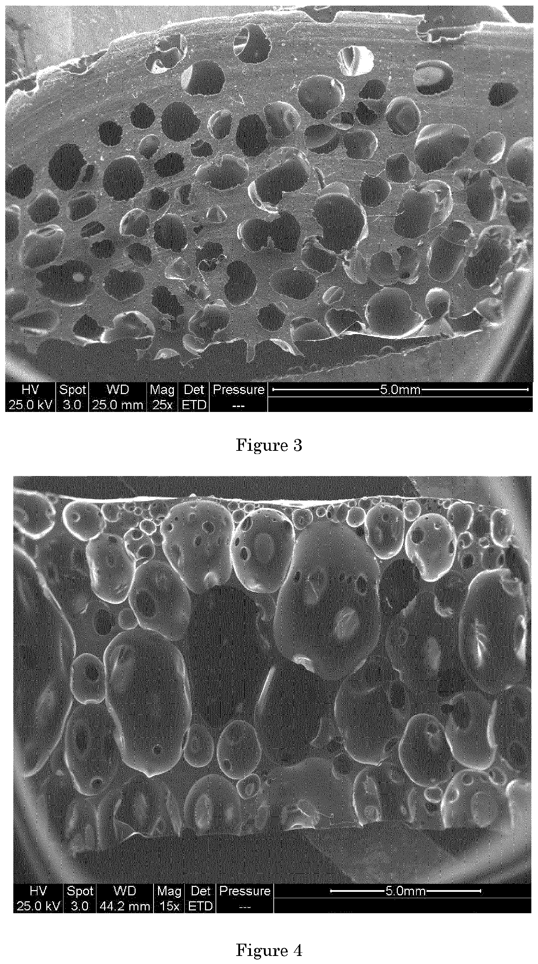

Example 3: Example 2 was reproduced with a curing temperature of 80°C during 3 h. A rigid foam was obtained with a density of 309 Kg/m³. A SEM image is presented in Figure 3.

Example 4: Example 2 was reproduced with a curing temperature of 25°C during 3 h and 100 °C during 3h. A rigid foam was obtained with a density of 170 Kg/m³. A SEM image is presented in Figure 4.

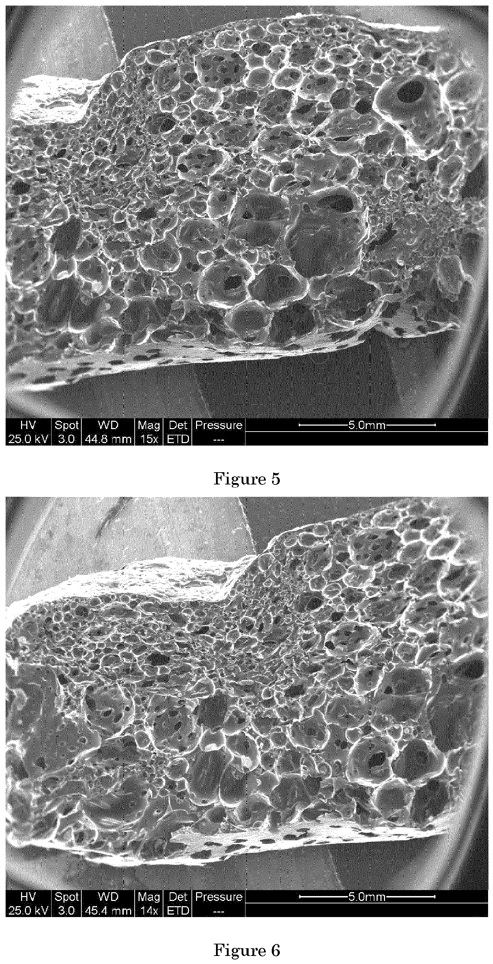

Example 5: A mixture of compounds A (TMPTC 0.8g, 55,8 wt% and isocyanurate-triCC 0.2g, 14 wt%), compound B (m-x Dia 0.350g 24.4 wt%), compound D (DBU, 0.052g, 3.6 wt%) and water (0.031g, 2.1 wt%) was placed in a silicon mold and stirred at room temperature for 1 minute. The mixture was placed in an oven at 100 °C for 3h. A rigid foam was obtained with a density of 177 Kg/m³ (Figure 5). A SEM image is presented in Figure 5.

Example 6: A mixture of compound A (TMPTC, 1g, 64.5 wt%), compound B (m-x Dia 0.350g, 22.5 wt%), compound D (DBU, 0.052g, 3.4 wt%), water (0.031g, 2 wt%) and Laponite S482 (0.120g and 7.7 wt%) was placed in a silicon mold and stirred at room temperature for 1 minute. The reactive mixture was placed in an oven at 100 °C for 3h. A rigid foam was obtained with a density of 186 Kg/m³. A SEM image is presented in Figure 6.

Example 7: A mixture of compounds A (TMPTC 0.8g, 57.8 wt% and isocyanurate-triCC 0.2g and 14.5 wt%), compound B (Hm Dia 0.300g and 21.7 wt%), compound D (DBU 0.052g, 3.8 wt%) and water (0.031g, 2.2 wt%) was placed in a silicon mold and stirred at room temperature for 1 minute. The reactive mixture was cured 3h at room temperature and then placed in an oven at 100 °C for 3h. A flexible foam was obtained with a density of 153 Kg/m³.

Example 8: A mixture of compound A (TMPTC 1g, 72.4 wt%), compound B (m-x Dia 0.350g, 25.3 wt%), and water (0.031g, 2.2 wt%) was placed in a silicon mold and stirred at room temperature for 1 minute. No compound D was added in this case. The reactive mixture was cured 3h at room temperature and then placed in an oven at 100 °C for 3h. A flexible foam was obtained with a density of 465 Kg/m³.

The following examples present the use of a mineral base as compound D. KOH has been grinded into fine powder to facilitate incorporation into the monomer mixture.

Example 9: A mixture of compound A (TMPTC, 1g, 68.1 wt%), compound B (m-x Dia 0.350g, 23.9 wt%), compound D (KOH powder 0.086g, 5.8 wt%) and water (0.031g, 2.1 wt%) was placed in a silicon mold and stirred at room temperature for 1 minute. The reactive mixture was placed in an oven at 100 °C for 3h. A rigid foam was obtained with a density of 218 Kg/m³.

Example 10: A mixture of compound A (TMPTC 0.8g, 54.5 wt% and isocyanurate-triCC 0.2g, 13.6 wt%), compound B (m-x Dia 0.350g, 23.9 wt%), compound D (KOH 0.086g, 5.8 wt%) and water (0.031g, 2.1 wt%) was placed in a silicon mold and stirred at room temperature for 1 minute. The reactive mixture was placed in an oven at 100 °C for 3h. A rigid foam was obtained with a density of 170 Kg/m³.

The following examples deal with the use of a hydrated inorganic salt as catalyst that also provides water for foaming.

Example 11: A mixture of compound A (TMPTC 1g, 65.1 wt%), compound B (m-x Dia 0.350g, 22.8 wt%), a hydrated inorganic salt (Na₂B₄O₇.10H₂O 0.131g, 8.5 wt%), compound D (DBU 0.052g, 3.4 wt%) was placed in a silicon mold and stirred at room temperature for 1 minute. No further water was added; water was provided by the dehydratation of Na₂B₄O₇.10H₂O upon heating. The reactive mixture was placed in an oven at 100 °C for 3h. A rigid foam was obtained with a density of 216 Kg/m³.

Example 12: A mixture of compound A (TMPTC 1g, 67.5 wt%), compound B (m-x Dia 0.350g, 23.6 wt%), a hydrated inorganic salt (Na₂B₄O₇.10H₂O 0.131g, 8.8 wt%) was placed in a silicon mold and stirred at room temperature for 1 minute. No further water was added; water was provided by the dehydratation of Na₂B₄O₇.10H₂O upon heating. The reactive mixture was placed in an oven at 100 °C for 3h. A rigid foam was obtained with a density of 315 Kg/m³. This example shows that Na₂B₄O₇.10H₂O is able to catalyze the reaction and to generate water needed for the blowing, even in the absence of DBU.

The following examples deals with the use of both water and thiol (compound H) as foaming agent.

Example 13: A mixture of compound A (TMPTC 1g, 62.9 wt%), compound B (m-x Dia 0.350g, 22 wt%), compound H (diTh, 0.156g, 9.8 wt%), water (0.031g, 1.9 wt%) and compound D (DBU 0.052g, 3.3 wt%) was placed in a silicon mold and stirred at room temperature for 1 minute. The reactive mixture was placed in an oven at 100 °C for 3h. A rigid foam was obtained with a density of 207 Kg/m³.

The following example deals with the use of a hydrated inorganic filler as the catalyst for foaming, either without any further compound D, or with DBU as compound D.

Example 14: A mixture of compound A (TMPTC 1g, 58.2 wt%), compound B (m-x Dia 0.350g, 20.3 wt%), water (0.248g, 14.4 wt%) and hydrotalcite (Mg₆Al₂(CO₃)(OH)₁₆.4H₂O, 0.120 g, 7.0 wt%) was placed in a silicon mold and stirred at room temperature for 1 minute. The reactive mixture was placed in an oven at 80 °C for 3h. A rigid foam was obtained with a density of 262 Kg/m³.

Example 15: A mixture of compound A (TMPTC 1g, 56.4 wt%), compound B (m-x Dia 0.350g, 19.8 wt%), water (0.248g, 14.0 wt%), compound D (DBU, 0.052g, 2.9 wt%) and hydrotalcite (Mg₆Al₂(CO₃)(OH)₁₆ .4H₂O, 0.120 g, 6.8 wt%) was placed in a silicon mold and stirred at room temperature for 1 minute. The reactive mixture was placed in an oven for 3h at 80°C or for 24h at 60°C. Rigid foams were obtained with a density of 215 Kg/m³ and 395 Kg/m³ respectively. The same formulation using another compound B (Cyh Dia, 0.310g) leads to a rigid foam with a density of 171 Kg/m³ after 3h of foaming at 80°C and a rigid foam with a density of 322 Kg/m³ after 24h at 60°C.

The following examples deal with the reprocessability of the foams of the invention (PHU) by compression molding under thermal treatment to form films, coatings, adhesives.

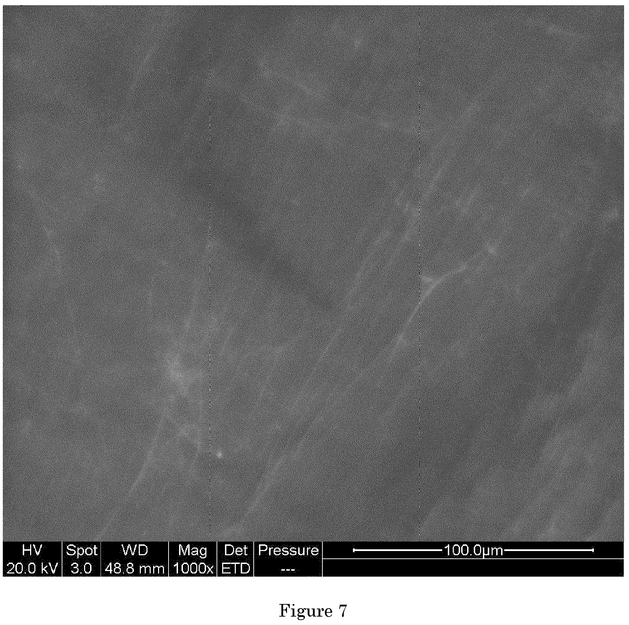

Example 16: Foam synthesized in example 2 was pressed on a Teflon film at a pressure of 1,000,000 kg and 160°C for 2 h. A cracks-free PHU film was obtained. A SEM image in presented in Figure 7.

Example 17: Foam synthesized in example 5 was pressed on a Teflon film at a pressure of 1,000,000 kg and 160°C for 2 h. A cracks-free PHU film was also obtained.

## Claims

1. A curable isocyanate-free formulation for preparing a polyurethane self-blowing foam comprising at least one multifunctional cyclic carbonate having at least two cyclic carbonate groups at the end of the chain (compound A), at least one multifunctional amine (compound B), water or/and a water source and optionally at least one catalyst (compound D).

2. Formulation according to claim 1 wherein compound A corresponds to formula I 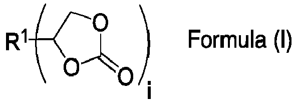 wherein
i is an integer higher than or equal to 2, in particular from 2 to 10, more particularly 2 or 3,
R¹ is a carbon bond between the cyclic carbonate rings or is a linear or branched hydrocarbon chain, which may be unsubstituted or substituted and wherein one or several hydrocarbon groups of said hydrocarbon chain may be replaced by a heteroatom, a ketone, a cycloalkyl, a heterocycle, an aryl or a heteroaryl, each of which may be unsubstituted or substituted, said hydrocarbon chain having at least 2 carbon atoms, in particular from 3 to 60 carbon atoms.

3. Formulation according to claim 1 or 2 wherein compound B corresponds to formula II
R²-(NHR')j Formula (II)
wherein
j is an integer higher than or equal to 2, in particular from 2 to 6,
R² is an aryl or heteroaryl, each of which may be unsubstituted or substituted, or a linear or branched hydrocarbon chain, which may be unsubstituted or substituted, and wherein one or several hydrocarbon groups of said hydrocarbon chain may be replaced by a heteroatom, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, and
wherein R' each independently may be hydrogen, an alkyl or a cycloalkyl.

4. Formulation according to any one of the preceding claims wherein compound D is selected from the group consisting of an amine catalyst, an ionic salt or ionic liquid composed of a combination of a cation and an anion, organometallic catalyst and a phosphine-based catalyst and is preferably 1,8-diazabicyclo[5.4.0]undec-7-ene, tetrabutylammonium phenolate, tetrabutyl ammonium hydroxide, potassium carbonate, cesium carbonate or potassium phosphate or hydrogenophosphate, sodium or potassium hydroxide.

5. Formulation according to any one of the preceding claims wherein compound A is present in an amount of from 18 to 80 wt%, in particular from 40 to 80 wt%, more in particular from 50 to 80 wt%, the percentage being expressed relative to the total weight of the formulation.

6. Formulation according to any one of the preceding claims wherein compound B is present in an amount of from 10 to 80 wt%, in particular from 10 to 70 wt%, more in particular from 10 to 50 wt%, the percentage being expressed relative to the total weight of the formulation.

7. Formulation according to any one of the preceding claims wherein water or/and water provided by a water source is present in an amount of from 0.05 to 50 wt%, in particular from 0.1 to 20 wt%, the percentage being expressed relative to the total weight of the formulation.

8. Formulation according to any one of the preceding claims wherein the water source is a hydrate and wherein the hydrate is present in an amount of from 0.05 to 50 wt%, in particular from 0.1 to 20 wt%, more in particular from 1 to 15 wt%.

9. Formulation according to any one of the preceding claims wherein compound D is present in an amount of from 0.1 to 50 wt%, in particular from 0.5 to 25 wt%, more in particular from 0.5 to 10 wt%, the percentage being expressed relative to the total weight of the formulation.

10. Formulation according to any one of the preceding claims further comprising a multifunctional thiol (compound H), preferably in an amount of from 1 to 50 wt%, in particular from 2 to 20 wt%, more in particular from 2 to 15 wt%, the percentage being expressed relative to the total weight of the formulation, said multifunctional thiol preferably corresponding to formula XII
R²⁶(-SH)ᵣ Formula (XII)
wherein
r is an integer higher than or equal to 2, in particular from 2 to 6,
R²⁶ is a linear or branched hydrocarbon chain, which may be unsubstituted or substituted, and wherein one or several hydrocarbon groups of said hydrocarbon chain may be replaced by a heteroatom, a ketone, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R²⁶ is a linear or branched polymeric group.

11. Formulation according to any one of the preceding claims further comprising a masked thiol precursor (compound C), wherein compound C is present in an amount of from 1 to 60 wt%, in particular from 2 to 40 wt%, more in particular from 5 to 20 wt%, the percentage being expressed relative to the total weight of the formulation.

12. Process for preparing a polyurethane self-blowing foam comprising the steps of providing a formulation as defined in any one of the preceding claims and curing said formulation preferably at a temperature between 25°C and 180°C, more preferably between 40 and 160°C and most preferably between 60 and 120°C so as to promote the formation of CO₂ and form a non-isocyanate polyurethane foam.

13. Process for preparing a polyurethane foam comprising the steps of
(i) mixing compounds A and B, and optionally compound C and/or H, optionally in the presence of compound D so as to form a viscous mixture,
(ii) partially curing said mixture so as to form a non-isocyanate polyurethane viscous prepolymer,
(iii) adding water or/and a water source, and optionally compound C and/or H to said prepolymer,
(iv) curing said mixture obtained in step (iii) so as to form a non-isocyanate polyurethane foam,
wherein compounds A, B, C, D and H are as defined in any one of claims 1 to 11.

14. Process for preparing a polyurethane foam comprising the steps of
(i) mixing compounds A, B, water or/and a water source, and optionally compound C and/or H, so as to form a viscous mixture,
(ii) partially curing said mixture so as to form a viscous prepolymer,
(iii) optionally adding compound D to said prepolymer,
(iv) curing said mixture obtained in step (iii) so as to promote the formation of CO₂ and form a non-isocyanate polyurethane foam,
wherein compounds A, B, C, D and H are as defined in any one of claims 1 to 11.

15. Polyurethane foam obtainable by the process as defined in any one of claims 12 to 14.

16. Process for recycling a polyurethane foam as defined in claim 15 by compression molding or extrusion.

17. Recycled polyurethane foam obtainable by the process as defined in claim 16 processed as a film, coating, adhesive, fiber or as bulk material.
